# EUROPÄISCHE PATENTANMELDUNG

(11) **EP 4 224 201 A1**
(43) Veröffentlichungstag der Anmeldung: **09.08.2023**
(21) Anmeldenummer: 23152535.3
(22) Anmeldetag: 19.01.2023
(51) Int. Cl.: G01S 7/40, E04F 15/024, G01S 7/41, G01S 13/04, H01Q 15/18, G01S 7/02, H04W 4/33, H04W 4/38

(54) **VORRICHTUNG UND SYSTEM ZUR ERFASSUNG VON OBJEKTEN AUF BÖDEN**

(30) Priorität: 07.02.2022 DE 102022102784
(71) Anmelder: Pilz GmbH & Co. KG, 73760 Ostfildern (DE)
(72) Erfinder: Loy, Stefan, 73760 Ostfildern (DE); Ibrocevic, Onedin, 73760 Ostfildern (DE); Bellingkrodt, Martin, 73760 Ostfildern (DE)
(74) Vertreter: Witte, Weller & Partner Patentanwälte mbB

(57) **Zusammenfassung**

Vorrichtung (10), zur Erfassung eines Objekts (80) auf einer Bodenplatte (50) mit einer Unterseite (52) und einer der Unterseite gegenüberliegenden, betretbaren Oberseite (54), aufweisend: eine Halterung (12), wobei die Halterung an, in oder unter der Bodenplatte (50) angebracht ist, und eine Radarvorrichtung (14), die dazu ausgestaltet ist ein Radarsignal auszusenden, ein von dem Objekt (80) reflektiertes Radarecho zu erfassen und ein Datensignal basierend auf dem Radarecho bereitzustellen, wobei die Halterung (12) dazu ausgestaltet ist, die Radarvorrichtung aufzunehmen.

## Beschreibung

Die vorliegende Erfindung betrifft eine Vorrichtung und ein System zur Erfassung eines Objekts auf einer Bodenplatte. Ferner betrifft die vorliegende Erfindung ein entsprechendes Verfahren.

Die fortschreitende Digitalisierung von Fertigungssystemen ermöglicht nicht nur eine höhere Flexibilität in der Produktion, sie führt auch zur Nutzung vernetzter und intelligenter technischer Systeme, in denen und mit denen der Mensch arbeitet. Insbesondere vor dem Hintergrund der zunehmenden Interaktion von Mensch und Roboter bzw. Maschine kommt Sensorsystemen und Messverfahren für eine automatische und sichere Personenerkennung eine immer größer werdende Bedeutung zu. In diesem Zusammenhang wird vor allem im Rahmen von Industrie 4.0 und "Ambient Intelligence" vermehrt über gute Arbeitsbedingungen und Sicherheit für den Menschen diskutiert. Um eine gefahrlose Interaktion zwischen Mensch und Maschine im Arbeitsprozess gewährleisten zu können, muss stets sichergestellt sein, dass der menschliche Körper zuverlässig detektiert wird.

Dabei sind einzelne Maschinen und Roboter oftmals bereits mit entsprechenden Sensoren ausgestattet. In Produktionshallen, in denen verschiedene Arbeitsprozesse unter Verwendung mehrerer Maschinen erfolgen, in denen beispielsweise auch fahrerlose Transportsysteme (FTS) zum Einsatz kommen, ist neben der Sensorik, die einzelne Maschinen eventuell bieten, aber auch ein globaleres Überwachungssystem erforderlich. Dieses soll möglichst alle laufenden Prozesse im Blick haben, also flächig ausgelegt sein, und in vorausschauender Weise den dort arbeitenden Menschen vor Gefahren schützen. Problematisch ist, dass in verschiedenen Maschinen oft verschiedene Sensorsysteme wie z.B. Laser- oder Radarsysteme zum Einsatz kommen, die untereinander weder kompatibel sind noch vernetzt werden können. Ferner ist bei Maschinen oder Systemen, die sich im Raum bewegen, mit derartigen einzelnen Sensorsystemen kaum eine hinreichende Sicherheit zu gewährleisten.

Neben der zunehmenden Digitalisierung in der Produktion an sich ist auch zu beobachten, dass von den Örtlichkeiten für Produktionsprozesse immer höhere Flexibilität abverlangt wird. Wo heute in einer Fabrikhalle noch Produkt A hergestellt wird, soll morgen schon ein anderes Produkt B hergestellt werden. Auch deswegen wird Sicherheitstechnik in Zukunft nicht wie bisher an eine Maschine gebunden sein, sondern großflächig und flexibel änderbar in der Produktion gefordert werden. Um diesen Anforderungen gerecht zu werden, müssen auch die Räumlichkeiten von Produktionsstätten die höher werdenden Flexibilitätsanforderungen erfüllen. So kommen auch immer ausgeklügeltere Infrastrukturkonzepte zum Einsatz. Um zu verhindern, dass beispielsweise eine Unmenge von Kabeln und Leitungen, die eben mit zunehmenden Digitalisierung einhergehen, als Kabelgewirr auf dem Fußboden einer Produktionshalle enden, werden selbige immer häufiger im Boden unter einer Bodenplatte verstaut. Damit sind die Kabel und Leitungen aus dem Weg geschafft und können bei Bedarf weiterhin leicht erreicht werden, indem eine entsprechende Bodenplatte angehoben wird.

Zur Überwachung von Produktionsprozessen wird das genannte Infrastruktursystem bereits häufig benutzt. So ist bekannt, dass Bodenplatten für die Erkennung von Objekten, insbesondere Personen, mit Gewichtssensoren ausgestattet werden können. Hier ergibt sich jedoch das Problem, dass Gewichtssensoren lediglich ein Gewicht bzw. eine Gewichtsänderung erfassen können. Es bleibt damit unklar, durch welche Art von Objekt das Gewicht bzw. dessen Änderung hervorgerufen wird. Es kann also nicht unterschieden werden, ob eine Gewichtsänderung auf einer Bodenplatte beispielsweise von einem darüber fahrenden Hubwagen oder einer darauf laufenden Person verursacht wird. Folglich kann das bekannte System den Menschen nicht in zuverlässiger Weise vor Gefahren durch Maschinen schützen und gleichzeitig einen reibungslosen Produktions- und/oder Logistikprozess gewährleisten.

Zwar sind auch kamerabasierte Systeme bekannt mit denen unter Einsatz entsprechender Software grundsätzlich eine Unterscheidung zwischen verschiedenen Arten von Objekten möglich ist, allerdings sind diese Systeme weit davon entfernt so zuverlässig zu arbeiten, dass sie sinnvoll in den betrieblichen Abläufen eingesetzt werden können. Tatsächlich funktionieren derartige kamerabasierte Überwachsungssysteme weder mit der gewünschten Zuverlässigkeit noch sind sie günstig genug, um in sinnvoller Weise eingesetzt werden zu können.

Vor diesem Hintergrund ist es eine Aufgabe der vorliegenden Erfindung, eine Vorrichtung bereitzustellen, die eine Erfassung von Objekten auf einer Bodenplatte ermöglicht und mit der es grundsätzlich möglich ist, auch zwischen Arten von Objekten (beispielsweise Mensch und Maschine) zu unterscheiden. Gleichzeitig soll die Vorrichtung kostengünstig und zuverlässig sein und in möglichst einfacher Weise einsetzbar sein.

Gelöst wird die Aufgabe durch eine Vorrichtung zur Erfassung eines Objekts auf einer Bodenplatte mit einer Unterseite und einer der Unterseite gegenüberliegenden, betretbaren Oberseite, wobei die Vorrichtung Folgendes aufweist:
eine Halterung, wobei die Halterung an, in oder unter der Bodenplatte angebracht ist, und
eine Radarvorrichtung, die dazu ausgestaltet ist, ein Radarsignal auszusenden, ein von dem Objekt reflektiertes Radarecho zu erfassen und ein Datensignal basierend auf dem Radarecho bereitzustellen,
wobei die Halterung dazu ausgestaltet ist, die Radarvorrichtung aufzunehmen.

Es ist somit eine Idee der vorliegenden Erfindung, eine Vorrichtung zur Erfassung eines Objekts anzugeben, die in bereits vorhandene Infrastruktursysteme in einfacher Weise integriert werden kann und die mit Radartechnik einen kostengünstigen Sensor bereitstellt, dessen Signal es grundsätzlich erlaubt eine Unterscheidung zwischen verschiedenen Arten von Objekten vorzunehmen. Insbesondere kann unter Einsatz der genannten Vorrichtung eine Personenerkennung erfolgen.

Die erwähnte Bodenplatte kann Teil eines Bodens sein oder den Boden, beispielsweise einer Werkshalle, bilden. Die Halterung kann außen auf einer Seite der Bodenplatte angebracht sein oder in diese integriert sein. Es ist zum Beispiel denkbar, dass die Bodenplatte einen Hohlraum umfasst oder unter sich einen Hohlraum aufweist und die Halterung samt der Radarvorrichtung in dem Hohlraum angeordnet ist. Für die Anwendung der Vorrichtung ist der Aufbau der Bodenplatte grundsätzlich beliebig. Insbesondere kann die Bodenplatte aus mehreren Schichten bestehen und einen Bodenbelag aufweisen. Das Material der Schichten kann dabei so gewählt werden, dass die Strahlausbreitung möglichst definiert erfolgt, so dass eine möglichst gute Ortsauflösung erreicht werden kann. Ebenso kann die Halterung unter der Bodenplatte, insbesondere an einem Objekt unter der Bodenplatte, angebracht sein.

Die Radarvorrichtung ist insbesondere dazu ausgestaltet das Radarsignal durch die Bodenplatte und/oder von der Bodenplatte auszusenden. Als Radarvorrichtung kommen sämtliche Vorrichtungen in Frage, die in der Lage sind, Radarstrahlen (bzw. ein Radarsignal) auszusenden und Radarstrahlen (bzw. ein Radarecho) zu empfangen. Bei der Radarvorrichtung kann es sich beispielsweise um eine Radarantenne auf einem PCB (printed circuit board), also einer Leiterplatte, handeln. Ebenso kann die Radarvorrichtung IC (integrated circuit) basiert sein. Der Öffnungswinkel des von der Radarvorrichtung ausgesandten Radarkegels beträgt vorteilhafterweise 90° und mehr. Grundsätzlich gilt, dass die Erfassung von Objekten umso flächiger erfolgen kann, je größer der Öffnungswinkel ist.

Grundsätzlich ist denkbar, dass eine Halterung dazu ausgestaltet ist mehrere Radarvorrichtungen aufzunehmen. Ferner ist denkbar, dass mehrere Halterungen und Radarvorrichtungen an, in oder unter einer Bodenplatte bzw. an oder in einer Stütze für die Bodenplatte angebracht sind. Damit kann zum einen sichergestellt werden, dass möglichst viel Raum zuverlässig via Radar erfasst wird. Zum anderen ermöglicht eine solche Anordnung eine redundante Überwachung des Raums oberhalb der Bodenplatte, was die Zuverlässigkeit der Vorrichtung bzw. des Systems steigern kann. Durch eine redundante Auslegung können insbesondere höhere Sicherheitskategorien und Performance-Level abgedeckt werden.

Vorzugsweise ist der Abstand zwischen Halterung und Bodenplatte und/oder der Abstand zwischen Radarvorrichtung und Bodenplatte vordefiniert. Damit kann der Verlauf der Radarstrahlen, die von der Radarvorrichtung ausgesandt werden, in definierter Weise erfolgen. Insbesondere kann damit die Größe des zu überwachenden Raumes oberhalb der Bodenplatte in definierter Weise eingestellt werden.

Die neue Vorrichtung kann in einfacher Weise nachgerüstet werden. Tatsächlich muss lediglich ein bestehendes Bodensystem (beispielsweise ein Doppelbodensystem) um eine Halterung und eine Radarvorrichtung ergänzt werden. Die Radarvorrichtung erlaubt es, in günstiger Weise Objekte in einem Raum zu erfassen und zu erkennen und damit Gefahren für Menschen vorherzusehen und entsprechende Warnsignale auszusenden oder aussenden zu lassen. Außerdem kann die Einrichtung der Vorrichtung derart vorgenommen werden, dass sie in keiner Weise stört, weil bestehende Infrastrukturen besser ausgenutzt werden. Die oben genannte Aufgabe ist somit vollständig gelöst.

In einer Ausgestaltung ist die Halterung der Vorrichtung an der Unterseite der Bodenplatte oder an der Oberseite der Bodenplatte angebracht. Ein Anbringen der Halterung auf der Oberseite der Bodenplatte hat den Vorteil, dass die Radarsignale bei Aussendung weg von der Bodenplatte nicht durch die Bodenplatte selbst gestört werden können. Mit anderen Worten kann in diesem Fall das Material der Bodenplatte beliebig sein. Insbesondere kann es sich bei dem Material der Bodenplatte dann auch um ein Material handeln, das Radarstrahlen nur wenig oder gar nicht hindurchlässt. Ein Anbringen der Halterung auf der Unterseite der Bodenplatte, die im Gegensatz zur Oberseite der Bodenplatte nicht betreten wird, hat wiederum den Vorteil, dass die Radarvorrichtung in einem geschützten Bereich angebracht ist, in dem insbesondere nicht auf sie getreten werden kann.

In einer anderen Ausgestaltung ist die Halterung an einer Stütze für die Bodenplatte, insbesondere auf einer Seite der Stütze, an der die Bodenplatte angeordnet ist, oder in einer Stütze für die Bodenplatte angebracht. Die Stütze ist dabei unter der Bodenplatte angeordnet und stützt die Bodenplatte von unten. Insbesondere kann die Halterung auf einer Oberseite der Stütze angebracht sein bzw. in diese integriert sein, wobei die Oberseite der Stütze vorzugsweise parallel zu oder gar in einer Ebene verläuft, in der die Oberseite der Bodenplatte verläuft. Bevorzugt kann die Stütze auch einen Hohlraum umfassen, in den die Radarvorrichtung aufgenommen werden kann.

In einer Ausgestaltung weist die Halterung einen Trägerfilm, eine Trägerplatte, ein topfförmiges Element, ein trichterförmiges Element und/oder ein schalenförmiges Element auf. Beispielsweise kann die Halterung ein Trägerfilm sein, auf den eine Radarvorrichtung in Form einer leitfähigen Kupferfolie aufgebracht ist. Vorzugsweise umfasst der Trägerfilm eine Klebeschicht, so dass er beispielsweise auf die Bodenplatte geklebt werden kann. Ebenso denkbar ist, dass der Trägerfilm dazu ausgestaltet ist statisch an der Bodenplatte anzuhaften. Gleichwohl kann es sich bei der Halterung um eine Trägerplatte in Form einer Platine handeln, auf welcher die Radarvorrichtung angebracht ist. Die Halterung kann aber ebenso einen voluminöseren Körper umfassen wie etwa eine Schale, die dazu ausgestaltet ist, die Radarvorrichtung aufzunehmen. Dies ist insbesondere dann von Vorteil, wenn die Radarvorrichtung aufgrund benötigter stärkere Radarsignale größer sein muss.

In einer weiteren Ausgestaltung ist die Halterung (an die Bodenplatte und/oder Stütze) mit einem Befestigungsmittel angebracht. Insbesondere kann die Halterung an die Bodenplatte und/oder Stütze geschraubt, genagelt, genietet, angehaftet oder geklemmt werden oder auf die Bodenplatte aufgedruckt werden. Beispielsweise kann die Halterung einen Korb umfassen, in den die Radarvorrichtung eingelegt wird und der mit Schrauben oder Nägeln an der Unterseite der Bodenplatte befestigt wird. Gleichwohl ist denkbar, dass die Halterung ein magnetisches Material umfasst, welches dazu ausgestaltet ist, an der Bodenplatte oder der Stütze durch magnetische Anhaftung befestigt zu werden. Eine statische Anhaftung oder eine Klebehaftung sind ebenso möglich. Weiterhin kann die Halterung beispielsweise eine Klemme oder Zwinge umfassen, die an die Stütze geklemmt werden kann. Darüber hinaus ist denkbar, dass die Halterung (vorzugsweise samt Radarvorrichtung) direkt auf die Bodenplatte aufgedruckt bzw. in diese eingeprägt wird.

In einer weiteren Ausgestaltung weist die Vorrichtung eine Blende auf, die dazu ausgestaltet ist, einen Teil des Radarsignals der Radarvorrichtung zu blockieren und/oder umzulenken. Mit anderen Worten kann die Blende dazu ausgestaltet sein, die Radarstrahlen der Radarvorrichtung zu bündeln. Die Blende kann beispielsweise einen Mantel aus Metall aufweisen, der um die Radarvorrichtung gestülpt ist und Radarsignale, die in Richtung des Mantels ausgestrahlt werden, blockiert. Der Abstand zwischen Blende und Halterung ist dabei vorzugsweise einstellbar.

In einer bevorzugten Ausgestaltung weist die Halterung die Blende auf. Beispielsweise kann die Blende in eine Wandung einer topfförmigen Halterung integriert sein. Die Blende kann aber auch als Platte oder Folie ausgestaltet sein, die auf der Halterung angebracht ist.

In einer weiteren Ausgestaltung weist die Vorrichtung ferner die Bodenplatte und/oder eine bzw. die Stütze (für die Bodenplatte) auf. Die Halterung ist dabei mit der Bodenplatte und/oder der Stütze, vorzugsweise lösbar, verbunden. Es ist aber auch denkbar, dass in dieser Ausgestaltung die Bodenplatte selbst die Halterung bildet. In einem derartigen Fall kann die Radarvorrichtung direkt in oder auf der Bodenplatte angeordnet werden. Insbesondere kann die Radarvorrichtung (direkt) auf die Bodenplatte aufgedruckt. Für den Fall, dass die Radarvorrichtung auf der Oberseite der Bodenplatte angeordnet wird, ist das Material (bzw. die Materialien) der Bodenplatte beliebig. Grundsätzlich in Frage kommende Materialien für die Bodenplatte umfassen Metall (insbesondere Stahl), Kunststoff, Glas, Holz oder Beton.

In einer bevorzugten Ausgestaltung, in der die Vorrichtung die Bodenplatte und/oder Stütze aufweist, ist die Bodenplatte und/oder Stütze zumindest bereichsweise durchlässig für das Radarsignal und das Radarecho. Mit anderen Worten weist die Bodenplatte und/oder Stütze zumindest bereichsweise eine Permittivität auf, die gleich oder größer einer Mindestpermittivität ist. Das heißt, dass die Bodenplatte oder Stütze so ausgeführt ist, dass die Radarstrahlen der Radarvorrichtung nicht völlig abgeschirmt werden. Die Mindestpermittivität ist materialabhängig. Ferner hängt die Mindestpermittivität von der Frequenz verwendeten des Radarsignals ab. Vorzugsweise weist die gesamte Bodenplatte eine Permittivität auf, die gleich oder größer einer Mindestpermittivität ist. Als Mindestpermittivität ist grundsätzlich eine Permittivität anzusetzen, das aus dem emfangenen Radarecho noch in sinnvoller Weise Rückschlüsse auf die Entfernung, Richtung, Geschwindigkeit oder Art des Objekts, das erfasst werden soll, gezogen werden können.

In einer weiteren Ausgestaltung ist die Bodenplatte und/oder Stütze Teil eines Doppelbodensystems, wobei das Doppelbodensystem vorzugsweise die DIN EN 12825 erfüllt. Es ist auch denkbar, dass die Vorrichtung das Doppelbodensystem umfasst. Als Doppelbodensystem ist generell ein System zu verstehen, das zumindest eine Bodenplatte umfasst, die einem (Raum-)Boden (möglichst parallel) in einem vordefinierten Abstand gegenüberliegt. Die Bodenplatte wird dabei von einer oder mehreren Stützen (des Doppelbodensystems) getragen bzw. die Bodenplatte wird auf einer oder mehreren Stützen gelagert. Grundsätzlich denkbar ist auch ein Bodensystem, in welchem mehrere Bodenplatten in paralleler, voneinander beabstandeter Weise einem Boden gegenüberliegen.

Die vorstehend genannte Aufgabe wird weiterhin gelöst durch ein System zur Erfassung eines Objekts auf einer Bodenplatte, wobei das System Folgendes aufweist:
die neue Vorrichtung, und
eine Datenverarbeitungseinrichtung, wobei die Datenverarbeitungseinrichtung dazu ausgestaltet ist, das Datensignal von der Radarvorrichtung zu empfangen und aus dem Datensignal zumindest eines von Entfernung des Objekts in Bezug auf die Bodenplatte und/oder eine (bzw. die) Stütze für die Bodenplatte, Richtung des Objekts in Bezug auf die Bodenplatte und/oder Stütze, Geschwindigkeit des Objekts und Art des Objekts zu bestimmen.

Die Datenverarbeitungseinrichtung kann dabei in die Vorrichtung integriert sein. Sie kann beispielsweise in die Halterung oder Stütze integriert sein oder an der Bodenplatte (vorzugsweise an der Unterseite der Bodenplatte) befestigt sein. Gleichwohl kann sich die Datenverarbeitungseinrichtung entfernt von der neuen Vorrichtung befinden. Die Datenverarbeitungseinrichtung kann mit einem Kabel oder kabellos mit der Radarvorrichtung verbunden sein.

In einer Ausgestaltung des Systems ist die Datenverarbeitungseinrichtung dazu ausgestaltet, die Art des Objektes zu klassifizieren, insbesondere als menschliches Objekt oder als Gegenstand zu klassifizieren. Damit kann durch das System insbesondere erkannt werden, ob sich ein Mensch im Bereich der Radarvorrichtung in Gefahr befindet und es kann entschieden werden, ob das System ein Warnsignal aussenden soll.

In einer weiteren Ausgestaltung des Systems ist die Datenverarbeitungseinrichtung dazu ausgestaltet, eine Bewegung des Objekts zu verfolgen. Aus den Bewegungsprofilen mehrerer Objekte kann dann beispielsweise eine drohende Gefahr durch Extrapolation zukünftiger Bewegungen erkannt werden. Es ist auch denkbar, dass für ein Objekt ein Bewegungsprofil erstellt wird und dass bei einer erneuten Erfassung des Objekts ein aktuelles Bewegungsprofil mit einem alten Bewegungsprofil verglichen wird, um Rückschlüsse auf evtl. drohende Gefahren im Bereich der Radarvorrichtung zu ziehen.

In einer weiteren Ausgestaltung weist das System ferner einen Radarreflektor auf, der dazu ausgestaltet ist, auf einer der Oberseite der Bodenplatte zugewandten Seite angebracht zu werden und das Radarsignal der Radarvorrichtung zu empfangen und ein entsprechendes Radarecho zu reflektieren. Der Radarreflektor kann beispielsweise an der Decke eine Raumes, etwa einer Fabrik- oder Messehalle, angebracht werden. Bei dem Radarreflektor kann es sich zum Beispiel um einen Tripelspiegel handeln. Die Verwendung eines Radarreflektors hat den Vorteil, dass er in Abwesenheit sämtlicher Objekte ein definiertes Radarecho liefert. Bei Anwesenheit eines Objekts wird dieses definierte Echo dann in einer bestimmten Art und Weise geändert. Mit anderen Worten schafft der Radarreflektor ein definiertes Bezugsecho. Damit können etwaige Objekte leichter und präziser erkannt werden. Anders ausgedrückt kann im Sinne der funktionalen Sicherheit durch den Einsatz des Radarreflektors überprüft werden, ob das System funktionsfähig ist. Insbesondere erhält man bei jeder Messung, d.h. bei jedem Aussenden des Radarsignals und Empfangen des Echos, eine Bestätigung, dass das System funktioniert, auch wenn kein Hindernis im Weg ist.

Die vorstehende Aufgabe wird auch gelöst durch ein Verfahren zur Erfassung eines Objekts auf einer Bodenplatte mit einer Unterseite und einer der Unterseite gegenüberliegenden, betretbaren Oberseite, wobei das Verfahren Folgendes aufweist:
Anbringen einer Halterung an, in oder unter der Bodenplatte, und
Bereitstellen einer Radarvorrichtung in der Halterung, wobei die Radarvorrichtung dazu ausgestaltet ist, ein Radarsignal auszusenden, ein von dem Objekt reflektiertes Radarecho zu erfassen und ein Datensignal basierend auf dem Radarecho bereitzustellen.
Insbesondere kann die Halterung an oder in einer Stütze (für die Bodenplatte) unter der Bodenplatte angebracht werden und die Radarvorrichtung kann dazu ausgestaltet sein, das Radarsignal durch die Bodenplatte und/oder weg von der Bodenplatte und/oder Stütze auszusenden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 eine vereinfachte, schematische Darstellung eines ersten Ausführungsbeispiels der neuen Vorrichtung in einer Querschnittsansicht,
Fig. 2 eine schematische Darstellung eines zweiten Ausführungsbeispiels der neuen Vorrichtung in einer Querschnittsansicht,
Fig. 3 eine schematische Darstellung eines dritten Ausführungsbeispiels der neuen Vorrichtung in einer Querschnittsansicht,
Fig. 4 eine schematische Darstellung eines vierten Ausführungsbeispiels der neuen Vorrichtung in einer Querschnittsansicht,
Fig. 5 eine schematische Darstellung eines fünften Ausführungsbeispiels der neuen Vorrichtung in einer Querschnittsansicht,
Fig. 6 eine vereinfachte, schematische Darstellung eines sechsten Ausführungsbeispiels der neuen Vorrichtung in einer Querschnittsansicht,
Fig. 7 eine Darstellung eines siebten Ausführungsbeispiels der neuen Vorrichtung in einer perspektivischen Ansicht, und
Fig. 8 eine schematische Darstellung eines ersten Ausführungsbeispiels des neuen Systems in einer Seitenansicht.

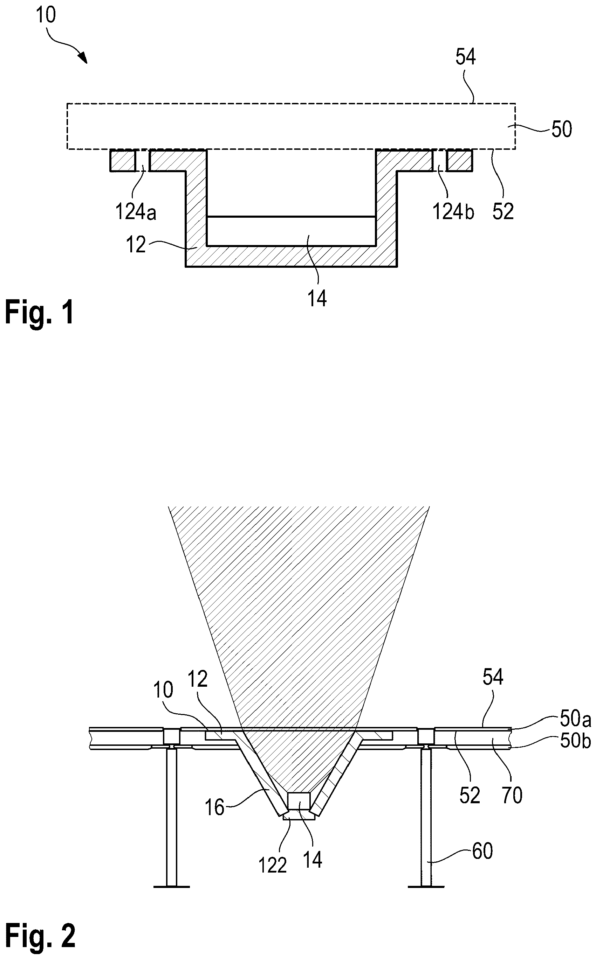

In Fig. 1 ist ein erstes Ausführungsbeispiel der neuen Vorrichtung in seiner Gesamtheit mit der Bezugsziffer 10 bezeichnet. Die Vorrichtung 10 umfasst eine Halterung 12 und eine in der Halterung 12 befindliche Radarvorrichtung 14. Die Halterung 12 ist in diesem Ausführungsbeispiel topfförmig. Am Boden des Topfes ist die Radarvorrichtung 14 befestigt. Die Radarvorrichtung 14 ist dazu ausgestaltet ein Radarsignal in Richtung der Bodenplatte 50 und durch die Bodenplatte 50 hindurch auszusenden. Die Halterung 12 umfasst mindestens zwei Öffnungen 124a und 124b, durch welche die Halterung 12 mit einem Befestigungsmittel wie beispielsweise Schrauben oder Nägeln an der Unterseite 52 der Bodenplatte 50 befestigt werden kann.

Wenn das von der Radarvorrichtung 14 ausgesandte Radarsignal von einem Objekt (nicht gezeigt), das sich auf der Oberseite 54 der Bodenplatte 50 befindet, als Radarecho reflektiert wird und das Radarecho von der Radarvorrichtung 14 aufgenommen wird, ist es möglich, über die Form des Radarechos bzw. einem darauf basierenden Datensignal Rückschlüsse auf das Objekt 80 zu ziehen. Insbesondere ist es möglich über die Form des Radarechos bzw. Datensignals herauszufinden, wie die Form des Objekts 80 ist und damit um welche Art von Objekt 80 es sich (wahrscheinlich) handelt.

Fig. 2 zeigt eine schematische Darstellung eines zweiten Ausführungsbeispiels der neuen Vorrichtung 10 in einer Querschnittsansicht. In Fig. 2 ist insbesondere ein Doppelbodensystem 70 gezeigt, das aus einer Bodenplatte 50a und einer in einem vorbestimmten Abstand unter der Bodenplatte 50a befindlichen weiteren Bodenplatte 50b zeigt. Neben den beiden Bodenplatten 50a und 50b umfasst das Doppelbodensystem 70 ferner zwei Stützen 60, an denen die Ecken der Bodenplatten befestigt sind. In diesem Ausführungsbeispiel sind weder die beiden Bodenplatten 50a und 50b noch die Stützen 60 Teil der Vorrichtung 10. Es sind aber auch Ausführungsbeispiele denkbar, in denen diese Komponenten zu der Vorrichtung gehören.

An der Unterseite 52 der Bodenplatte 50a ist die Halterung 12 der Vorrichtung 10 angebracht. In diesem Ausführungsbeispiel ist die Halterung 12 an die Unterseite 52 geklebt. Die Halterung 12 geht durch eine Aussparung der Bodenplatte 50b hindurch. Die Halterung 12 ist trichterförmig ausgestaltet und umfasst eine Bodenseite 122, auf der die Radarvorrichtung 14 angeordnet ist. Die Radarvorrichtung 14 strahlt Radarstrahlen in Form eines Kegels in Richtung der Bodenplatte 50 ab. Die Wandseite der trichterförmigen Halterung 12 wirkt dabei als Blende 16 (bzw. umfasst eine Blende 16) und beschränkt den Öffnungswinkel des Radarkegels. Je nach Neigung der Blende 16 kann der Öffnungswinkel verkleinert oder vergrößert und damit ein kleinerer oder größerer Raum mit der Radarvorrichtung 14 erfasst werden.

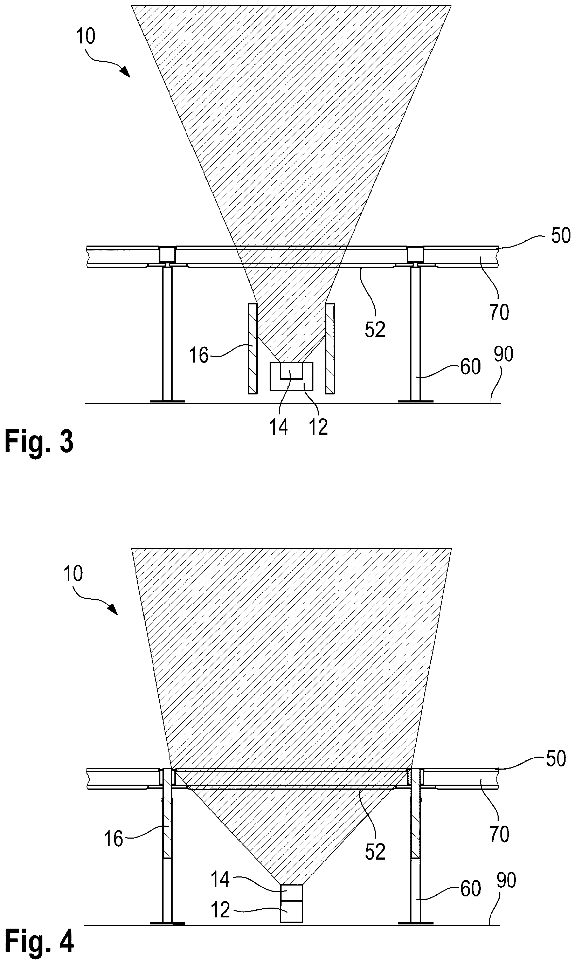

Fig. 3 zeigt eine schematische Darstellung eines dritten Ausführungsbeispiels der neuen Vorrichtung 10 in einer Querschnittsansicht, Die Vorrichtung 10 umfasst in diesem Ausführungsbeispiel eine Halterung 12, eine darin befindliche Radarvorrichtung 14, eine Blende 16, eine Bodenplatte 50 und Stützen 60, die die Bodenplatte 50 an ihren Rändern tragen. Die Bodenplatte 50 ist dabei Teil eines Doppelbodensystems 70.

Die Halterung 12 ist unter der Bodenplatte 50 angeordnet, genauer gesagt auf einer Seite, die der Unterseite 52 der Bodenplatte 50 zugewandt ist. Tatsächlich steht die Halterung auf einem Boden 90. Um die Halterung 12 ist die Blende 16 angeordnet, die ebenfalls auf dem Boden 90 steht. Die Blende 16 besteht in diesem Ausführungsbeispiel aus mehreren Wänden (zwei davon sind in Fig. 3 gezeigt), die sich auf jeweils einer Seite der Halterung 12 von dem Boden 90 weg in Richtung der Bodenplatte 50 erstrecken. Die Wände bestehen dabei aus einem Material, dass das Radarsignal der Radarvorrichtung 14 nicht durchlässt. In diesem Ausführungsbeispiel wurde Metall als Material der Wände ausgewählt.

Die Wände der Blende 16 sind derart angeordnet, dass sie einen Teil der Radarstrahlen (bzw. des Radarsignals), die von der Radarvorrichtung 14 ausgesandt werden, blockieren und dadurch den Öffnungswinkel des von der Radarvorrichtung 14 ausgesandten Radarkegels verringern. Da die Wände der Blende 16 in diesem Ausführungsbeispiel frei angeordnet sind bzw. auf dem Boden 90 in sämtliche Richtungen verschoben werden können, kann auch der Öffnungswinkel des Radarkegels nach Bedarf verändert werden. Durch eine Variation des Öffnungswinkels des Radarkegels kann bei mehreren benachbart angeordneten Radarvorrichtungen erreicht werden, dass sich die Radarkegel oberhalb der Bodenplatte 50 bodenplattennah überlappen oder eben nicht überlappen. Ein Überlapp hat den Vorteil, dass die mehreren empfangenen Radarechos Informationen umfassen, die unter Umständen redundant sind. Dies kann die Zuverlässigkeit der Vorrichtung 10 steigern bzw. Objekte können dann zuverlässiger erfasst und erkannt werden.

Fig. 4 zeigt eine schematische Darstellung eines vierten Ausführungsbeispiels der neuen Vorrichtung 10 in einer Querschnittsansicht. Im Unterschied zu dem in Fig. 3 gezeigten dritten Ausführungsbeispiel ist in dem vierten Ausführungsbeispiel der Vorrichtung 10 die Blende 16 in die Stütze 60 der Bodenplatte 50 integriert. Genauer gesagt umfasst die Stütze 60 in ihrem Inneren einen Hohlraum, in den die Blende 16 aufgenommen ist. Da die Anordnung der Stützen in der Regel von der Größe der Bodenplatten 50 abhängt, ist in dieser Ausgestaltung die Beweglichkeit der Blende 16 eingeschränkt. Anderseits bietet die Vorrichtung 10 dieses vierten Ausführungsbeispiels den Vorteil, dass die Blende 16 nirgends im Weg ist und in der Stütze nicht verrutschen oder kippen kann.

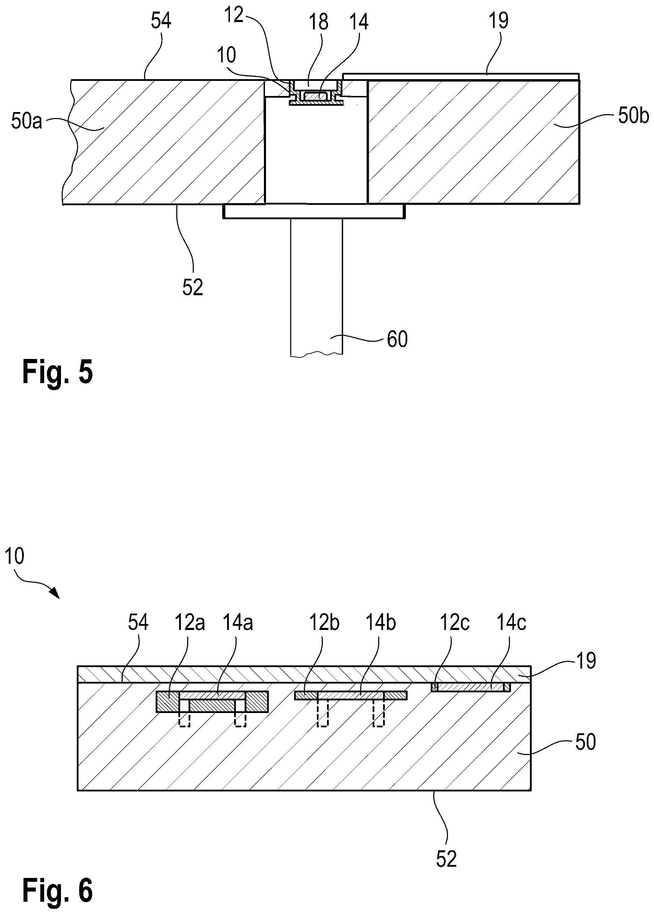

Fig. 5 zeigt eine schematische Darstellung eines fünften Ausführungsbeispiels der neuen Vorrichtung 10 in einer Querschnittsansicht. Fig. 5 zeigt eine Stütze 60 und zwei Bodenplatten 50a und 50b, die jeweils mit der Stütze 60 verbunden sind. Auf der Bodenplatte 50b ist ein Bodenbelag 19 aufgebracht. Weder die Bodenplatten 50a und 50b, noch der Bodenbelag 19 und die Stütze 60 sind in diesem Ausführungsbeispiel Teil der Vorrichtung 10. Tatsächlich besteht die Vorrichtung 10 in diesem Ausführungsbeispiel lediglich aus der Halterung 12 und der Radarvorrichtung 14, wobei die Halterung 12 in diesem Ausführungsbeispiel in der Stütze 60 integriert ist. In Fig. 5 ist insbesondere eine Halterung 12 zu sehen, die in einen Hohlraum an der Oberseite der Stütze 60 integriert ist. Als Oberseite der Stütze 60 ist dabei diejenige Seite der Stütze 60 zu verstehen, an der die Bodenplatten 50a und 50b befestigt sind. Die Vorrichtung 10 umfasst in diesem Ausführungsbeispiel ferner eine Abdeckung 18 für die Radarvorrichtung. Die Abdeckung sollte möglichst aus einem Material bestehen, dass durchlässig für Radarstrahlen ist. Ferner sollte es sich um ein robustes Material handeln, da die Oberseite der Stütze 60 durchaus mit schwerem Gerät belastet werden können soll bzw. betretbar sein soll. Beispielsweise kann die Abdeckung 18 eine Kappe aus hartem Kunststoff umfassen.

Fig. 6 zeigt eine vereinfachte, schematische Darstellung eines sechsten Ausführungsbeispiels der neuen Vorrichtung 10 in einer Querschnittsansicht, Die Vorrichtung 10 umfasst in diesem Ausführungsbeispiel eine Bodenplatte 50, eine erste Halterung 12a, die eine erste Radarvorrichtung 14a fasst, eine zweite Halterung 12b, die eine zweite Radarvorrichtung 14b fasst, eine dritte Halterung 12c, die eine dritte Radarvorrichtung 14c fasst und einen Bodenbelag 19, der auf der Bodenplatte 50 aufgebracht ist. Der Bodenbelag 19 umfasst ein Material, welches zumindest im Bereich der Radarvorrichtungen 14a, 14b und 14c durchlässig für Radarstrahlen ist. In dieser Ausgestaltung sind die von den Radarvorrichtungen 14a, 14b und 14c ausgesandten Signale unterschiedlicher Frequenz und/oder Signalstärke. Dadurch können verschiedene Objekte noch präziser erfasst werden. Die in Fig. 6 gezeigte Bodenplatte 50 kann Teil eines Doppelbodensystems sein. Die Bodenplatte 50 kann aber ebenso direkt, d.h. ohne Abstand zu einem Boden 90, angeordnet sein. Tatsächlich kann die Bodenplatte 50 auch Teil eines Bodens 90 sein oder einen Boden 90 bilden bzw. umfassen. Grundsätzlich kann die Halterung 12 bzw. die Radarvorrichtung 14 auch direkt auf die Bodenplatte aufgedruckt sein.

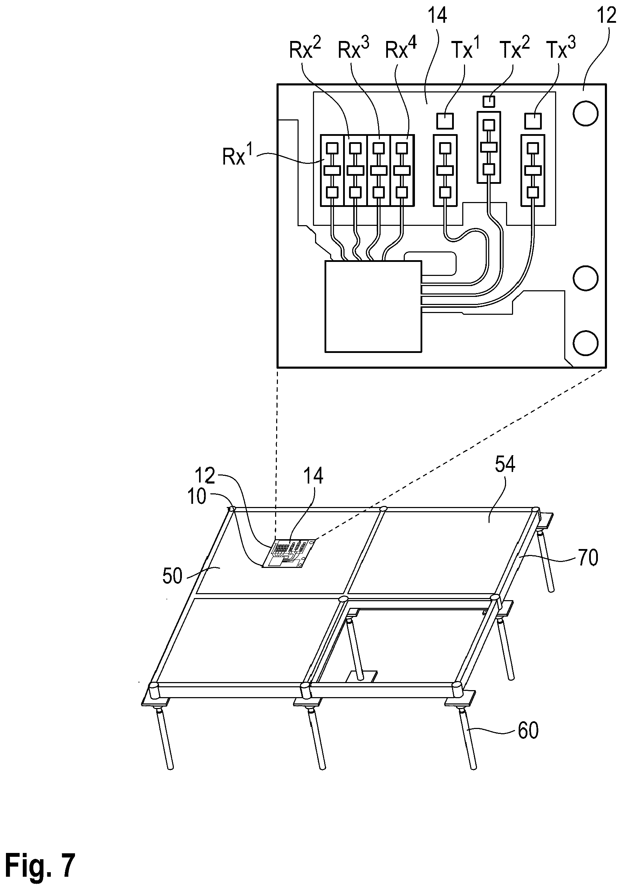

Fig. 7 zeigt eine Darstellung eines siebten Ausführungsbeispiels der neuen Vorrichtung 10 in einer perspektivischen Ansicht. Insbesondere zeigt Fig. 7 ein Doppelbodensystem 70, das aus mehreren Bodenplatten 50 besteht, die von mehreren Stützen 60 getragen werden. Auf der Oberseite 54 einer der Bodenplatten 50 ist eine Vorrichtung 10 gezeigt, die eine Halterung 12 und eine Radarvorrichtung 14 umfasst. Die Halterung 12 besteht aus einem Trägerfilm bzw. einer Trägerfolie, auf die eine Radarvorrichtung 14 aufgedruckt ist. Wie aus der vergrößerten Darstellung erkennbar ist, umfasst die Radarvorrichtung 14 mehrere Transmitter Tx zur Aussendung eines Radarsignals und mehrere Receiver Rx zum Empfang eines Radarechos.

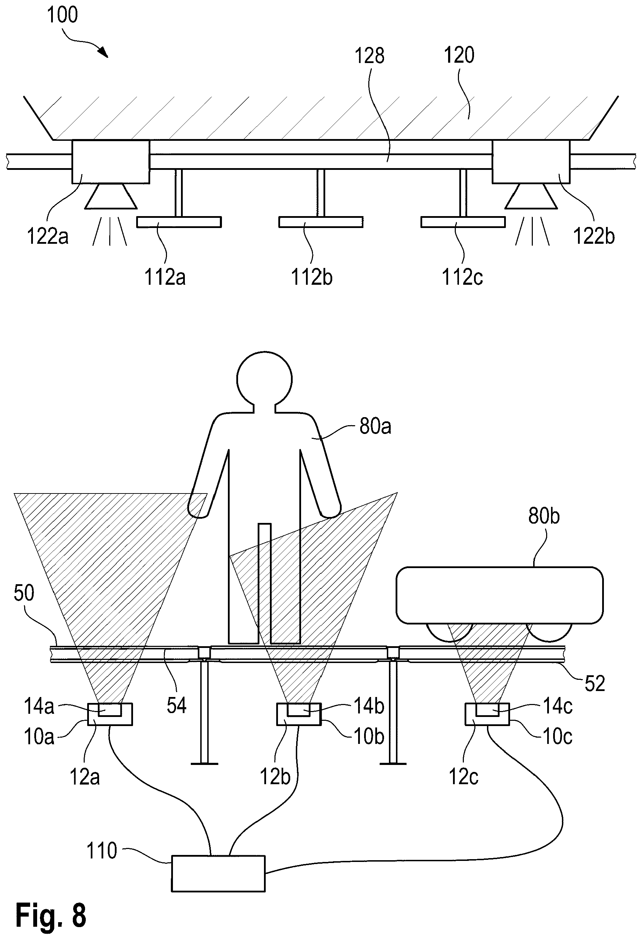

Fig. 8 zeigt eine schematische Darstellung eines ersten Ausführungsbeispiels des neuen Systems 100 in einer Seitenansicht. Das System 100 umfasst drei der neuen Vorrichtungen 10a, 10b und 10c, die jeweils aus einer Halterung (12a, 12b, 12c) und einer Radarvorrichtung (14a, 14b und 14c) bestehen, und eine Datenverarbeitungseinrichtung 110, die mit den drei Vorrichtungen 10a, 10b und 10c verbunden ist. Ferner umfasst das System 100 drei Radarreflektoren 112a, 112b und 112c. Diese sind an einem Gestänge 128 an einer Decke 120 (beispielsweise einer Fabrikhalle) montiert und dazu ausgestaltet, die von den Vorrichtungen 10a, 10b und 10c ausgesandten Radarsignale zu empfangen und ein den jeweiligen Radarsignalen entsprechendes Radarecho zurückzusenden. Das Gestänge 128 kann auch verwendet werden, um beispielsweise Beleuchtungsvorrichtungen 122a und 122b anzubringen. Nach Aufnahme der Radarechos durch die Radarvorrichtungen 14a, 14b und 14c und Bereitstellung von Datensignalen, basierend auf den Radarechos, für die Datenverarbeitungseinrichtung 110 bestimmt die Datenverarbeitungseinrichtung 110 aus den Radarechos bzw. Datensignalen zumindest die Geschwindigkeit und Form (bzw. Art) der Objekte 80a und 80b, die sich auf den Bodenblatten 50 befinden. Insbesondere ist die Datenverarbeitungseinrichtung 110 in der Lage aus den empfangenen Echos zu bestimmen ob es sich bei den Objekten 80a und 80b um lebendige Objekte handelt. Daraus kann die Datenverarbeitungseinrichtung 110 ferner ableiten, ob für einen Menschen eine Gefahr, beispielsweise durch ein anderes erfasstes, bewegliches Objekt droht.

## Patentansprüche

1. Vorrichtung (10), zur Erfassung eines Objekts (80) auf einer Bodenplatte (50) mit einer Unterseite (52) und einer der Unterseite gegenüberliegenden, betretbaren Oberseite (54), aufweisend:
eine Halterung (12), wobei die Halterung an, in oder unter der Bodenplatte (50) angebracht ist, und
eine Radarvorrichtung (14), die dazu ausgestaltet ist, ein Radarsignal auszusenden, ein von dem Objekt (80) reflektiertes Radarecho zu erfassen und ein Datensignal basierend auf dem Radarecho bereitzustellen,
wobei die Halterung (12) dazu ausgestaltet ist, die Radarvorrichtung aufzunehmen.

2. Vorrichtung (10) nach Anspruch 1, wobei die Halterung (12) an der Unterseite (52) der Bodenplatte (50) oder an der Oberseite (54) der Bodenplatte (50) angebracht ist.

3. Vorrichtung (10) nach Anspruch 1, wobei die Halterung (12) an einer Stütze (60) für die Bodenplatte (50), insbesondere auf einer Seite der Stütze (60), an der die Bodenplatte (50) angeordnet ist, oder in einer Stütze (60) für die Bodenplatte (50) angebracht ist.

4. Vorrichtung (10) nach einem der Ansprüche 1 bis 3, wobei die Halterung einen Trägerfilm, eine Trägerplatte, ein topfförmiges Element, ein trichterförmiges Element und/oder ein schalenförmiges Element aufweist.

5. Vorrichtung (10) nach einem Ansprüche 1 bis 4, wobei die Halterung (12) mit einem Befestigungsmittel angebracht ist.

6. Vorrichtung (10) nach einem der Ansprüche 1 bis 5, ferner aufweisend eine Blende (16), die dazu ausgestaltet ist, einen Teil des Radarsignals der Radarvorrichtung (14) zu blockieren und/oder umzulenken.

7. Vorrichtung nach Anspruch 6, wobei die Halterung (12) die Blende (16) aufweist.

8. Vorrichtung (10) nach einem der Ansprüche 1 bis 7, ferner aufweisend die Bodenplatte (50) und/oder eine Stütze (60).

9. Vorrichtung (10) nach Anspruch 8, wobei die Bodenplatte (50) und/oder Stütze (60) zumindest bereichsweise durchlässig für das Radarsignal und das Radarecho ist.

10. Vorrichtung (10) nach einem der Ansprüche 8 oder 9, wobei die Bodenplatte (50) und/oder Stütze (60) Teil eines Doppelbodensystems (70) ist, wobei das Doppelbodensystem (70) vorzugsweise DIN EN 12825 erfüllt.

11. System (100), zur Erfassung eines Objekts (80) auf einer Bodenplatte (50), aufweisend:
eine Vorrichtung (10) nach einem der Ansprüche 1 bis 10, und
eine Datenverarbeitungseinrichtung (110), wobei die Datenverarbeitungseinrichtung (110) dazu ausgestaltet ist, das Datensignal von der Radarvorrichtung zu empfangen und aus dem Datensignal zumindest eines von Entfernung des Objekts (80) in Bezug auf die Bodenplatte (50) und/oder eine Stütze (60) für die Bodenplatte (50), Richtung des Objekts (80) in Bezug auf die Bodenplatte (50) und/oder Stütze, Geschwindigkeit des Objekts (80) und Art des Objekts (80) zu bestimmen.

12. System (100) nach Anspruch 11,
wobei die Datenverarbeitungseinrichtung (110) dazu ausgestaltet ist, die Art des Objektes (80) zu klassifizieren, insbesondere als menschliches Objekt oder als Gegenstand zu klassifizieren.

13. System (100) nach Anspruch 11 oder 12,
wobei die Datenverarbeitungseinrichtung (110) dazu ausgestaltet ist, eine Bewegung des Objekts (80) zu verfolgen.

14. System (110) nach einem der Ansprüche 11 bis 13,
ferner aufweisend einen Radarreflektor (112), der dazu ausgestaltet ist, auf einer der Oberseite (54) der Bodenplatte (50) zugewandten Seite angebracht zu werden und das Radarsignal der Radarvorrichtung (14) zu empfangen und ein entsprechendes Radarecho zu reflektieren.

15. Verfahren, zur Erfassung eines Objekts (80) auf einer Bodenplatte (50) mit einer Unterseite (52) und einer der Unterseite (52) gegenüberliegenden, betretbaren Oberseite (54), aufweisend:
Anbringen einer Halterung (12) an, in oder unter der Bodenplatte (50), und
Bereitstellen einer Radarvorrichtung (14) in der Halterung (12), wobei die Radarvorrichtung (14) dazu ausgestaltet ist, ein Radarsignal auszusenden, ein von dem Objekt (80) reflektiertes Radarecho zu erfassen und ein Datensignal basierend auf dem Radarecho bereitzustellen.
